Europäisches Patentamt

European Patent Office

Office européen des brevets

(11) Numéro de publication: **0 093 063**
**B1**

(12) **FASCICULE DE BREVET EUROPEEN**

(45) Date de publication du fascicule du brevet:
**20.03.85**

(51) Int. Cl.⁴: **F 23 C 11/02,** F 23 G 5/00,
B 01 J 8/26

(21) Numéro de dépôt: **83400846.8**

(22) Date de dépôt: **28.04.83**

(54) Procédé et dispositif de contrôle de la température d'une réaction réalisée en lit fluidisé.

(30) Priorité: **28.04.82 FR 8207379**

(43) Date de publication de la demande:
**02.11.83 Bulletin 83/44**

(45) Mention de la délivrance du brevet:
**20.03.85 Bulletin 85/12**

(84) Etats contractants désignés:
**AT BE CH DE FR GB IT LI LU NL SE**

(56) Documents cités:
**FR - A - 2 209 074**
**GB - A - 2 030 275**
**US - A - 2 970 117**

(73) Titulaire: **CREUSOT-LOIRE, 42 rue d'Anjou,**
**F-75008 Paris (FR)**

(72) Inventeur: **Borgnat, Daniel, 4 Impasse des Peupliers**
**Torcy, F-71210 Montchanin (FR)**
Inventeur: **Chrysostome, Gérard, 7, rue de Nevers,**
**F-71200 Le Creusot (FR)**

(74) Mandataire: **Dupuy, Louis et al, CREUSOT-LOIRE 15 rue**
**Pasquier, F-75383 Paris Cedex 8 (FR)**

ACTORUM AG

## Description

L'invention a pour objet un procédé et un dispositif de contrôle de la température d'une réaction réalisée en lit fluidisé.

En raison de leur forte capacité calorifique, on utilise depuis longtemps les lits fluidisés pour la réalisation de toutes sortes de réactions mettant en jeu des quantités d'énergie thermique importantes telles que des réactions chimiques, la gazéification de matières hydrocarbonées, la production de ciment ou la combustion de matière combustible ou de déchets pour la production d'énergie.

Dans certains cas, on utilise un lit fluidisé du type circulant, c'est-à-dire contenant des particules solides susceptibles d'être entraînées avec les gaz sortant de la chambre de réaction, puis récupérées dans un dispositif de séparation et recyclées dans le lit fluidisé.

Les lits circulants sont utilisés par exemple dans les réacteurs de gazéification ou les chambres de combustion dans lesquels les particules imbrûlées entraînées avec les fumées sont recyclées dans le lit fluidisé jusqu'à combustion complète.

Le lit fluidisé peut aussi être constitué de particules inertes. C'est le cas par exemple dans le brevet français FR-A N° 2209074 qui concerne un dispositif d'incinération de déchets, dans lequel le lit fluidisé contient des particules incombustibles qui sont entraînées avec les fumées puis, après séparation, passent dans un échangeur de chaleur où elles cèdent leurs calories avant d'être renvoyées dans la chambre de combustion pour y être de nouveau chauffées. Dans ce procédé, la circulation des particules ne sert donc qu'au transfert de calories entre la chambre de combustion et l'échangeur de chaleur.

Par ailleurs, certaines réactions doivent se produire à une température qui doit rester relativement constante ou bien être maintenue au-dessous d'une certaine limite, par exemple pour éviter la fusion des cendres pouvant gêner le fonctionnement du lit fluidisé ou bien pour effectuer une désulfuration.

Pour réaliser une régulation de température du lit fluidisé, on refroidit généralement celui-ci soit en y injectant un fluide modérateur comme de l'air, de l'eau ou de la vapeur d'eau, soit en y immergeant des tubes refroidis par circulation d'un fluide caloporteur et qui peuvent par exemple produire de la vapeur ou de l'eau chaude.

L'injection d'un fluide modérateur dans le lit, qui est utilisé notamment dans les réacteurs de gazéification, a l'inconvénient de diminuer la qualité du gaz produit. Le refroidissement du lit fluidisé par des tubes immergés n'a pas cet inconvénient, mais limite la souplesse des installations. En effet, le coefficient d'échange est relativement constant et on est donc amené, dans certaines applications, à cloisonner le lit fluidisé en compartiments et à ajuster le nombre de compartiments en fonctionnement à la puissance demandée, ce qui, évidemment, complique l'installation.

L'invention a pour objet un procédé et un dispositif ne présentant pas ces inconvénients et permettant cependant d'ajuster en continu la température du lit fluidisé à un niveau déterminé.

A cet effet, le lit fluidisé fonctionne en lit circulant pour au moins une partie des particules solides qu'il contient et il est associé à un échangeur de chaleur branché en parallèle sur le circuit de recyclage des particules.

Selon l'invention, on divise le flux de particules séparées des fumées en deux parties, une partie chaude recyclée directement dans le lit fluidisé et une partie refroidie constituée de particules prélevées à la sortie du dispositif de séparation et que l'on fait passer dans un échangeur de chaleur où elles cèdent leurs calories pour constituer une réserve de matière froide susceptible d'être mélangée à la partie chaude avant réinjection dans le lit fluidisé, les débits relatifs de particules chaudes et froides étant réglées de façon à contrôler le débit et la température moyenne du flux de particules recyclées dans le lit fluidisé pour le maintien au niveau voulu de la température de réaction au sein de celui-ci.

L'invention s'applique plus spécialement à la régulation de température d'un lit fluidisé utilisé pour la gazéification d'une matière lignocellulosique comme des déchets de scierie, des copeaux de bois ou, d'une façon générale, ce que l'on englobe sous le terme de biomasse.

Dans une telle installation, l'oxygène introduit à la base du réacteur maintient le lit fluidisé en suspension et permet la gazéification. Cependant, du fait que le bois produit peu de cendres, on préfère généralement utiliser un lit fluidisé formé d'une matière de support inerte constituée de particules incombustibles susceptibles d'être mises en suspension telles que, par exemple, du sable ou de l'alumine et au sein desquelles sont réparties les particules de bois.

Selon l'invention, on introduit dans la matière solide de fluidisation une certaine quantité de particules fines destinées à constituer la matière froide gardée en réserve pour servir à la régulation de la température du lit fluidisé.

Dans ce cas, une caractéristique essentielle du procédé réside donc dans le fait que, si la matière fluidisée ne contient pas ou ne produit pas de fines susceptibles d'être entraînées avec les fumées, on préfère lui rajouter une quantité déterminée de fines que l'on met en circulation en passant par un échangeur de chaleur de façon à obtenir un moyen de contrôle de la température du lit fluidisé assez souple pour réaliser une véritable régulation de température sans, cependant, interférer sur la composition des gaz produits.

L'invention couvre également un dispositif permettant la mise en œuvre du procédé pour le contrôle de la température d'une réaction réalisée dans un lit fluidisé à l'intérieur d'une chambre de réaction fonctionnant en lit circulant et reliée par une cheminée à un séparateur des particules solides entraînées avec les fumées, débouchant dans un circuit de recyclage dans le lit fluidisé des particules récupérées.

Le dispositif selon l'invention comprend un échangeur de chaleur branché sur un circuit de dérivation d'une partie des particules récupérées, rejoignant la gaine de recirculation en amont du point de réintroduction dans la chambre, le circuit de dérivation comprenant un organe de contrôle des débits relatifs des particules chaudes et froides recyclées.

Ainsi, alors que, dans les procédés connus jusqu'à présent, le rôle des particules solides dans la réaction pouvait être de servir de combustible, de catalyseur ou de simple support de fluidisation, dans le procédé et le dispositif selon l'invention on donne aux particules fines entraînées avec les fumées un rôle supplémentaire qui peut même être essentiel, et qui consiste à servir de réserve de matière froide sur laquelle on peut prélever une certaine quantité de particules que l'on recycle dans le lit fluidisé avec un débit contrôlé de façon à assurer une régulation de la température de la réaction au sein du lit fluidisé.

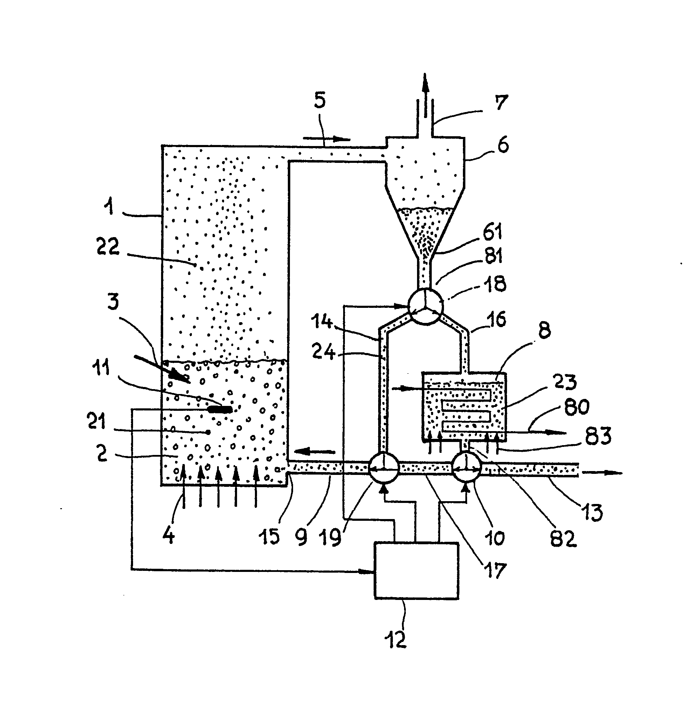

Mais l'invention sera mieux comprise en se référant à un mode de réalisation donné à titre d'exemple et représenté sur le dessin annexé.

La figure unique représente schématiquement un réacteur à lit fluidisé muni du dispositif de contrôle suivant l'invention.

Comme on l'a indiqué, l'invention s'adapte particulièrement bien aux réacteurs dits à lit circulant utilisés lorsque le gaz de fluidisation a une vitesse importante et/ou lorsque l'on désire augmenter le temps de séjour des particules traitées.

Sur la figure, on a représenté schématiquement une telle installation comportant une enceinte cylindrique 1 constituant le réacteur, munie à sa base de moyens 4 d'injection du gaz de fluidisation pour constituer un lit fluidisé 2 de matières solides. L'enceinte 1 est reliée à sa partie supérieure par une cheminée 5 à une chambre de récupération 6 dont la base 61 est elle-même reliée par une gaine de recirculation 14 à une conduite d'introduction 9 débouchant dans une entrée 15 par laquelle la matière récupérée dans le cyclone 6 est réinjectée dans le lit fluidisé.

Dans le cas représenté, la vitesse des gaz introduits par les injecteurs 4 est telle qu'une proportion importante des matières solides forme une suspension diluée dans la partie supérieure de l'enceinte 1 et s'échappe par la cheminée 5. Il s'établit donc, de façon connue, un circuit de circulation des particules les plus fines entre l'enceinte 1 et le cyclone 6 reliés par les gaines 5 et 14, les particules les plus lourdes 21 remplissant une zone plus dense 2, à la base du réacteur 1. On peut ainsi contrôler le temps de séjour d'une matière combustible, puisque les particules les plus lourdes restent dans la zone dense 2 et que les particules les plus fines 22 entraînées par les fumées et comportant encore une partie combustible sont renvoyées dans le lit fluidisé par la gaine 14.

Lorsque le produit à gazéifier est du charbon, les fumées entraînent des cendres fines qui sont captées dans une chambre de récupération 6 constituée normalement par un ou plusieurs cyclones dans lesquels sont introduites les fumées par la cheminée 5, les gaz étant évacués par une conduite 7 alors que les fines récupérées se rassemblent à la base 61 du cyclone 6.

Lorsque la matière à gazéifier est de la biomasse et en particulier des plaquettes ou des copeaux de bois produisant très peu de cendres, l'utilisation du cyclone 6 pour la récupération des fines peut ne pas être nécessaire. L'une des caractéristiques du procédé selon l'invention réside précisément dans le fait que l'on va faire en sorte que le lit fluidisé contienne une certaine quantité de particules fines, susceptibles d'être entraînées dans tous les cas avec les fumées et récupérées dans le cyclone 6. Ainsi, dans le cas de la gazéifiction du bois, on pourra introduire, dans la matière inerte 2 servant de support à la fluidisation, une certaine quantité de particules 22 de fine granulométrie destinées essentiellement à être entraînées avec les fumées et récupérées dans le cyclone 6.

Selon la caractéristique essentielle de l'invention, au moins une partie 23 des fines récupérées dans le cyclone 6 sert de réserve de matière froide destinée à assurer la régulation de température du lit fluidisé et, à cet effet, passe dans un échangeur de chaleur 8 qui, de préférence, est branché en parallèle avec le circuit de recyclage 14, sur un circuit de dérivation 16, 17.

L'échangeur 8 est constitué, de façon classique, d'une chambre verticale comportant des moyens de refroidissement tels que des tubes 80 parcourus par un fluide caloporteur et constituant une surface d'échange. La chambre 8 est munie d'un orifice supérieur 81 dans lequel débouche une conduite de dérivation 16 branchée sur le début de la gaine de recirculation 14, en aval de la sortie 61 du cyclone 6, et d'un orifice inférieur 82 débouchant dans une conduite de sortie 17 branchée sur la conduite d'introduction 9, par exemple au débouché de la gaine de recyclage 14 et sur laquelle est placé un organe 10 de contrôle du débit de matière froide 23 recyclée.

La proportion de particules fines prélevées par la conduite de dérivation 16 peut être constante ou bien réglée par une vanne 18 placée sur la bifurcation des conduites 14 et 16.

Les particules fines 22 récupérées par le cyclone 6 et prélevées par la conduite de dérivation 16 se rassemblent donc dans la chambre 8 où elles forment un lit dense 23 qui circule de haute en bas en se refroidissant au contact des tubes 80. L'organe 10 de contrôle du débit des fines recyclées par la conduite 17 peut être de tout type approprié, comme un sas rotatif, une pompe à vis, ou simplement une injection de gaz à débit réglable. De préférence, la température du lit fluidisé mesurée par un capteur 11 permet, grâce à un dispositif de régulation 12 facile à concevoir, de régler le débit recyclé par l'intermédiaire de l'organe de contrôle 10. Le dimensionnement de l'échangeur est fait pour le débit maximal et il peut donc, dans une certaine mesure, absorber un excès de débit de fines. Cependant, la quantité excédentaire peut également être évacuée par une sortie 13.

On a ainsi décrit un moyen de régulation de la température du lit fluidisé 2 ne risquant pas d'interférer sur la compositin des gaz produits par la réaction de gazéification et ayant cependant un temps de réponse très court, l'échangeur 8 gardant en réserve une quantité importante de fines refroidies sur laquelle on peut puiser en fonction des besoins pour le maintien de la température du lit fluidisé 2.

D'ailleurs, on peut également faire déboucher la conduite d'évacuation 13 sur une réserve servant de trop-plein et sur laquelle on peut puiser pour, en cas de besoin, apporter au lit fluidisé un débit important de fines refroidies.

L'échangeur 8 peut être refroidi par tout moyen et produire ou non une énergie récupérable. Pour augmenter le taux de refroidissement, on peut introduire à sa base un fluide de refroidissement comme de la vapeur d'eau ou de l'air par des injecteurs 83, avec un débit suffisamment faible pour ne pas gêner le fonctionnement du cyclone 6, la chambre 8 étant munie à sa partie supérieure de moyens d'évacuation des gaz ayant traversé la matière solide 23.

Bien entendu, la possibilité, selon l'invention, de régler la température du lit fluidisé 2 par injection de fines refroidies n'interdit pas d'introduire par les injecteurs 4, à la base du réacteur 1, un certain débit de vapeur d'eau qui joue le rôle de modérateur. Cependant, grâce à l'invention, il sera possible de limiter la quantité de vapeur d'eau injectée avec l'oxygène au seuil minimal nécessaire à la réaction de gazéification, la quanité complémentaire nécessaire à l'ajustement de la température étant remplacée par le débit voulu de fines recyclées.

L'organe de contrôle 10 du débit de matière froide, en particulier s'il est associé à la vanne de partage 18, permet de régler les débits relatifs de matières chaudes et froides introduites dans le réacteur par la conduite 9. Cependant, pour régler avec plus de souplesse le débit et la température moyenne des particules recyclées, on peut jouer simultanément et en sens inverse sur les débits de particules chaudes 24 et froides 23 au moyen d'une vanne 19 placée à la jonction des conduites 14 et 17 avec la conduite d'introduction 9.

Bien entendu, la circulation des fines et leur introduction dans le lit fluidisé 2 peut nécessiter l'emploi de moyens spéciaux qui ne sont pas décrits ici, ce problème étant déjà connu pour le fonctionnement des lits circulants.

Comme indiqué dans le cas de la figure, le refroidissement des fines dans l'échangeur 8 peut être réglé en agissant soit sur la vitesse de circulation de haut en bas des fines, soit sur l'intensité du refroidissement. D'une façon générale, l'ensemble des moyens de réglage peut être commandé par un circuit d'asservissement comprenant une unité de commande 12 recevant différentes informations et notamment la température du lit fluidisé donnée par le capteur 11 et donnant des ordres de commande aux différents moyens de réglage.

Bien entendu, l'invention ne se limite pas seulement au mode de réalisation qui a été décrit, d'autres variantes pouvant être imaginées sans sortir du cadre des revendications, notamment pour perfectionner ou simplifier l'installation décrite. C'est ainsi que la réserve de matière froide 23 peut être constituée par l'échangeur 8 lui-même, s'il est de dimensions suffisantes, ou bien par une capacité supplémentaire placée en aval de l'échangeur 8 ou même, comme on l'a indiqué, sur un circuit supplémentaire alimenté par la conduite 13. Mais l'on pourrait aussi, dans certaines conditions, placer une réserve de matière chaude 24 sur le circuit de recyclage 14 de façon à jouer plus facilement sur les débits de matière chaude 24 et froide 23.

D'autre part, comme on l'a indiqué, l'invention peut s'appliquer dans tous les cas où l'on désire contrôler la température d'une réaction exothermique réalisée en lit fluidisé, comme la gazéification ou la combustion de matières hydrocarbonées, l'incinération de déchets, le grillage de minerais sulfurés tels que pyrites, blendes, sulfures d'argent, etc., ainsi que dans l'industrie chimique.

## Revendications

1. Procédé de contrôle de la température d'une réaction réalisée à l'intérieur d'une enceinte (1) dans un lit fluidisé (2) contenant des particules solides (22) susceptibles d'être entraînées avec les fumées, puis récupérées dans un dispositif de séparation (6) et recyclées dans le lit fluidisé, caractérisé par le fait que l'on divise le flux de particules séparées des fumées en deux parties, une partie chaude (24) recyclée directement dans le lit fluidisé (2) et une partie refroidie (23) constituée de particules prélevées à la sortie du dispositif de séparation (6), et que l'on fait passer dans un échangeur de chaleur (8) où elles cèdent leurs calories pour constituer une réserve de matière froide (23) susceptible d'être mélangée à la partie chaude (24) avant réinjection dans le lit fluidisé (2), les débits relatifs de particules chaudes (24) et de particules froides (23) étant réglés de façon à contrôler le débit et la température moyenne du flux de particules recyclées dans le lit fluidisé pour le maintien au niveau voulu de la température de réaction au sein de celui-ci.

2. Procédé de contrôle, selon la revendication 1, de la température d'un lit fluidisé constitué d'une matière inerte en suspension au sein de laquelle est effectuée la gazéification d'une matière lignocellulosique, caractérisé par le fait que l'on maintient dans la matière inerte (21) de fluidisation une certaine quantité de particules fines (22) susceptibles d'être entraînées avec les fumées, lesdites fines étant récupérées, puis refroidies et recyclées dans le lit fluidisé avec un débit et une température moyenne contrôlés.

3. Dispositif de contrôle de la température d'une réaction réalisée en lit fluidisé à l'intérieur d'une enceinte verticale (1) munie, à sa partie inférieure, de moyens (4) d'injection d'un fluide et, à sa partie supérieure, d'une cheminée (5) d'évacuation des gaz débouchant dans une chambre (6) de récupération des particules solides fines entraînées avec les gaz, reliée à la base de l'enceinte de fluidisation (1) par un circuit de recyclage sur lequel est placé un échangeur de chaleur (8), caractérisé par le fait que l'échangeur de chaleur (8) est branché en parallèle avec une conduite du circuit de recyclage (14) sur un circuit de dérivation (16, 17) d'une partie (23) des particules fines, comprenant une conduite d'alimentation (16) et une conduite de sortie (17) branchées sur la conduite de recyclage (14), respectivement en aval de la sortie (61) de la chambre de récupération (6) et en amont du point (15) de réintroduction des fines dans l'enceinte (1), la conduite de sortie (17) étant munie d'un organe (10) de contrôle du débit de recyclage des particules refroidies (23).

4. Dispositif de contrôle de température selon la revendication 3, caractérisé par le fait que le circuit de recyclage comprend une vanne (18) de réglage du débit de particules dirigées vers l'échangeur de chaleur (8), placée à la jonction de la conduite d'alimentation (16) avec la conduite de recyclage (14).

5. Dispositif de contrôle de température selon l'une des revendications 3 ou 4, caractérisé par le fait que le circuit de recyclage comprend une vanne (19) de réglage en sens inverse des débits relatifs de particules chaudes (24) et froides (23), placée à la jonction de la conduite de sortie (17) de l'échangeur (8) avec la conduite de recyclage (14).

6. Dispositif de contrôle de température selon l'une des revendications 3, 4 ou 5, caractérisé par le fait que l'ensemble des moyens de réglage est commandé par un organe de régulation (12) recevant au moins une information sur la température régnant dans le lit fluidisé (2), donnée par un capteur (11) et donnant des ordres de commande aux différents organes (10, 18, 19) de réglage de débits.

**Patentansprüche**

1. Verfahren zur Steuerung der Temperatur einer im Inneren eines Behälters (1) in einem Fliessbett (2) durchgeführten Reaktion, wobei feste Teilchen (22) von den Gasen mitgerissen und anschliessend in einer Trennvorrichtung (6) wiedergewonnen und in das Fliessbett rückgeführt werden, dadurch gekennzeichnet, dass man den Strom der aus den Gasen abgetrennten Teilchen in zwei Teile auftrennt, nämlich in einen heissen Teil (24), der direkt in das Fliessbett (2) rückgeführt wird, und in einen abgekühlten Teil (23), der aus am Ausgang der Trennvorrichtung (6) entnommenen Teilchen besteht und zur Bildung eines Vorrats an kalter Masse (23), der mit dem heissen Teil (24) vor seiner erneuten Einbringung in das Fliessbett (2) vermischt werden kann, durch einen Wärmetauscher (8), die Teilchen wo ihre Wärme abgeben, geführt wird, wobei die relativen Abgabemengen an heissen Teilchen (24) und kalten Teilchen (23) so geregelt werden, dass der Durchsatz und die mittlere Temperatur des Stromes der in das Fliessbett rückgeführten Teilchen im Sinne einer Aufrechterhaltung eines gewünschten Reaktionstemperaturniveaus im Inneren des Fliessbettes gesteuert wird.

2. Verfahren zur Steuerung der Temperatur eines Fliessbettes nach Anspruch 1, das aus einem inerten, suspendierten Material gebildet ist und in dem eine Holzzellulosemasse vergast wird, dadurch gekennzeichnet, dass man in dem inerten Fliessbettmaterial (21) einen gewissen Anteil an feinen Teilchen (22) vorsieht, die von den Gasen mitgerissen, wiedergewonnen, anschliessend abgekühlt und mit einer kontrollierten Durchsatzmenge und einer kontrollierten mittleren Temperatur in das Fliessbett rückgeführt werden.

3. Verfahren zur Steuerung der Temperatur einer in einem Fliessbett stattfindenden Reaktion im Inneren eines vertikalen Behälters (1), der an seinem unteren Teil mit Einspritzvorrichtungen (4) für ein Fluid und an seinem oberen Teil mit einem Abzug (5) zur Entfernung von Gasen versehen ist, der in eine Kammer (6) zur Wiedergewinnung der feinen festen, von den Gasen mitgerissenen Teilchen mündet, die mit der Basis des Fliessbettbehälters (1) über eine Rückführleitungsanordnung verbunden ist, in der ein Wärmetauscher (8) vorgesehen ist, dadurch gekennzeichnet, dass der Wärmetauscher (8) über eine Leitungsanordnung (16, 17) zum Abzweigen eines Teils (23) der feinen Teilchen, die eine Zuführleitung 16 und eine Abführleitung (17) aufweist, die mit der Rückführungsleitung (14) einerseits nach dem Ausgang (61) der Rückgewinnungskammer (6) und anderseits vor der Wiedereinbringungsstelle (15) für die feinen Teilchen in den Behälter (1) verbunden ist, mit einer Leitung (14) der Rückführanordnung parallel geschaltet ist, wobei die Abführleitung (17) ein Steuerorgan (10) zur Abgabe der rückgeführten abgekühlten Teilchen (23) aufweist.

4. Vorrichtung zur Steuerung der Temperatur nach Anspruch 3, dadurch gekennzeichnet, dass die Rückführleitungsanordnung ein Ventil (18) zur Steuerung der am Wärmetauscher (8) abgegebenen Teilchenmenge umfasst, das am Kreuzungspunkt zwischen Zuführleitung (16) und der Rückführleitung (14) angeordnet ist.

5. Vorrichtung zur Steuerung der Temperatur nach einem der Ansprüche 3 oder 4, dadurch gekennzeichnet, dass die Rückführleitungsanordnung ein Ventil (19) zur Steuerung der relativen Durchsatzmengen der heissen Teilchen (24) und kalten Teilchen (23) in die umgekehrte Richtung umfasst, welches Ventil am Kreuzungspunkt der Abführleitung (17) des Wärmetauschers (8) mit der Rückführleitung (14) angeordnet ist.

6. Vorrichtung zur Steuerung der Temperatur nach einem der Ansprüche 3, 4 oder 5, dadurch gekennzeichnet, dass die aus den Steuervorrichtungen bestehende Einheit von einem Regelorgan (12) betätigt wird, das mindestens eine Information über die im Fliessbett (2) herrschende Temperatur empfängt, die von einem Fühler abgegeben wird, und den verschiedenen Durchsatzmengenregelorganen (10, 18, 19) Steuerbefehle erteilt.

## Claims

1. Process for controlling the temperature of a reaction carried out inside an enclosure (1) in a fluidized bed (2) containing solid particles (22) which are capable of being entrained by the fumes and then recovered in a separating device (6) and recycled into the fluidized bed, characterised in that the stream of particles which are separated from the fumes is divided into two portions, a hot portion (24) which is recycled directly into the fluidized bed (2) and a cooled portion (23) which consists of particles withdrawn at the exit of the separating device (6) and which are passed through a heat exchanger (8) where they give up their heat to form a reserve of cold material (23) which may be mixed with the hot portion (24) before being reinjected into the fluidized bed (2), the relative flow rates of the hot particles (24) and the cold particles (23) being regulated so as to control the flow rate and the average temperature of the stream of particles recycled into the fluidized bed for keeping the temperature of reaction within the latter at the intended level.

2. Process for controlling the temperature of a fluidized bed according to Claim 1, consisting of an inert material in a suspension within which is carried out the gasification of a lignocellulose material, characterised in that a quantity of fine particles (22) which are capable of being entrained with the fumes, is maintained in the fluidized inert material (21), the said fines being recovered, and then cooled and recycled into the fluidized bed at a flow rate and an average temperature which are controlled.

3. Device for controlling the temperature of a reaction carried out in a fluidized bed inside a vertical enclosure (1) equipped in its lower part with means (4) for injecting a fluid and in its upper part with a gas discharge duct (5) wich opens into a chamber (6) for recovering the fine solid particles entrained with the gases, which chamber is connected to the base of the fluidization enclosure (1) by a recycle circuit in which is placed a heat exchanger (8), characterised in that the heat exchanger (8) is connected in parallel with a pipeline of the recycle circuit (14) in a circuit for diverting (16, 17) a portion (23) of the fine particles, incorporating a feed conduit (16) and an outlet conduit (17) which are connected to the recycle conduit (14), respectively downstream of the outlet (61) of the recovery chamber (6) and upstream of the re-entry point (15) of the fines into the enclosure (1), the outlet conduit (17) being equipped with a device (10) for controlling the recycle flow rate of the cooled particles (23).

4. Device for controlling temperature according to Claim 3, characterised in that the recycle circuit incorporates a valve (18) for regulating the flow rate of particles directed towards the heat exchanger (8), the valve being placed at the junction of the feed conduit (16) with the recycleconduit (14).

5. Device for controlling temperature according to either of Claims 3 or 4, characterised in that the recycle circuit incorporates a valve (19) for regulating in the opposite direction the relative flow rates of hot particles (24) and cold particles (23) which is placed at the junction of the outlet conduit (17) of the exchanger (8) with the recycle conduit (14).

6. Device for controlling temperature according to one of Claims 3, 4 or 5, characterised in that all of the means for regulation are controlled by a regulating device (12) which receives at least one datum for the temperature predominating in the fluidized bed (2), given by a sensor (11) and which issues control commands to the various devices (10, 18, 19) for controlling flow rates.